# EUROPÄISCHE PATENTANMELDUNG

(11) **EP 3 608 078 A1**
(43) Veröffentlichungstag der Anmeldung: **12.02.2020**
(21) Anmeldenummer: 19190313.7
(22) Anmeldetag: 06.08.2019
(51) Int. Cl.: B29C 45/14, B29C 51/10, B29C 69/00, B29C 51/14, B29C 51/16, B29C 51/26, B29C 51/30

(54) **VERFAHREN UND ANLAGE ZUR HERSTELLUNG IN-MOULD-DEKORIERTER KUNSTSTOFFFORMTEILE**

(30) Priorität: 07.08.2018 DE 102018213252
(71) Anmelder: Gubesch Thermoforming GmbH, 91489 Wilhelmsdorf (DE)
(72) Erfinder: LINDNER, Franziska, 91083 Baiersdorf (DE); MÜLLER-LENHARDT, Thomas, 90427 Nürnberg (DE); REICHART, Marc, 90471 Nürnberg (DE); WLASAK, Klaus, 91489 Wilhelmsdorf (DE)
(74) Vertreter: FDST Patentanwälte

(57) **Zusammenfassung**

Zur wirtschaftlichen Herstellung eines IMD-Kunststoffbauteils (5) wird verfahrensgemäß aus einer endlosen IMD-Prozessfolie (1), die eine Trägerfolie (3) und eine einseitig auf dieser aufgebrachte, transferierbare IMD-Lackpaket aufweist, ein konturnah bezüglich einer mit dem IMD-Lackpaket zu dekorierenden Oberfläche (6) des IMD-Kunststoffbauteils (5) zugeschnittener Folienzuschnitt (14) vereinzelt, dieser Folienzuschnitt (14) in ein geöffnetes Kunststoffverarbeitungswerkzeug (12) eingebracht, das Kunststoffverarbeitungswerkzeug (12) vollständig oder bis auf einen Resthub geschlossenen, in dem Kunststoffverarbeitungswerkzeug (12) eine fließfähige Kunststoffmasse auf das IMD-Lackpaket aufgebracht, durch die Kunststoffmasse eine Tragstruktur ausgebildet, und das IMD-Lackpaket zur Ausbildung des IMD-Kunststoffbauteils (5) als Dekorlage auf die Tragstruktur transferiert. Insbesondere wird bei einer Umformung im Werkzeug der Überstand des Folienzuschnitts bei zunehmender Tiefe der Struktur ebenfalls größer vorgegeben, selbst wenn eine auf die Ebene der IMD-Folie projizierte Grundfläche der Struktur gleich bleibt.

## Beschreibung

Die Erfindung betrifft ein Verfahren zur Herstellung eines Kunststoffbauteils, insbesondere IMD-Kunststoffbauteils. Ferner betrifft die Erfindung auch eine Anlage zur Herstellung eines solchen Kunststoffbauteils, insbesondere IMD-Kunststoffbauteils, wobei die Anlage insbesondere zur Durchführung des vorstehend genannten Verfahrens eingerichtet ist.

Unter einem IMD-Kunststoffbauteil wird hier und im Folgenden ein Kunststoffbauteil verstanden, das auf einer Außenseite, die zugleich eine Sichtfläche dieses Kunststoffbauteils bildet, ein IMD-Lackpaket aufweist. "IMD" steht hierbei für "In-Mould-Decoration". Dabei handelt es sich um ein Dekorationsverfahren von Kunststoffbauteilen, bei dem ein auf einer (endlosen) Trägerfolie aufgebrachtes Lackpaket (auch als "IMD-Lackpaket" bezeichnet) unter dem Einfluss von Druck und Temperatur auf das Kunststoffbauteil übertragen wird. Bei dem Lackpaket handelt es sich beispielsweise um eine Lackschicht (insbesondere eine Farb-Lackschicht, optional auch um eine Klarlackschicht), vorzugsweise aber um mehrere Schichten unterschiedlicher Funktionalität, insbesondere eine Haftvermittlerschicht, eine oder mehrere Farb-Lackschichten sowie optional eine Schutzschicht (insbesondere ein klarer Schutzlack) und/oder eine "Release-Schicht" (zum einfacheren Lösen des Lackpakets von der Trägerfolie). Das aus der Trägerfolie und dem IMD-Lackpaket gebildete Halbzeug wird hier und im Folgenden als IMD-Prozessfolie oder kurz "IMD-Folie" bezeichnet. Konkret wird bei einem IMD-Verfahren die das IMD-Lackpaket tragende Trägerfolie der IMD-Folie auf der das IMD-Lackpaket tragenden Seite üblicherweise mit der Schmelze eines thermoplastischen Kunststoffs hinterfüttert. Aufgrund der Temperatur und des mittels der Kunststoffschmelze übertragenen Drucks wird das IMD-Lackpaket von der Trägerfolie gelöst und verbleibt auf dem durch die erstarrte Kunststoffschmelze gebildeten Bauteil. Die IMD-Folie - konkret die Trägerfolie - selbst bildet also keinen Bestandteil des derart hergestellten IMD-Kunststoffbauteils.

Unter "Hinterfüttern" wird hier und im Folgenden insbesondere verstanden, dass auf eine flächige Dekorschicht - wie z. B. das IMD-Lackpaket der vorstehend beschriebenen IMD-Prozessfolie - insbesondere schmelzflüssiger thermoplastischer Kunststoff aufgebracht wird. Die Dekorschicht wird hierbei zunächst in eine die Außenkontur des späteren Kunststoffbauteils definierende Kavität (d. h. einen Formhohlraum) eines Kunststoffverarbeitungswerkzeugs (bspw. ein Gieß-Werkzeug, oft allgemein auch als Spritzgießwerkzeug bezeichnet) eingebracht. Anschließend wird das Kunststoffverarbeitungswerkzeug und damit die Kavität geschlossen und flüssiger Kunststoff -je nach Verfahrensvariante - beispielsweise durch Spritzgießen, Spritzprägen, Hinterpressen oder auch durch Thermoplastschaumspritzgießen auf die Dekorschicht aufgebracht und verteilt. Dort bildet der Kunststoff nach dem Erstarren eine Tragstruktur für die Dekorschicht, im Fall des IMD-Verfahrens somit für das auf dem Bauteil verbleibende IMD-Lackpaket. Häufig erfolgt vor dem Hinterfüttern auch ein Tiefziehen der IMD-Folie, um diese an zumindest eine Wand der Kavität anzulegen und die Außenkontur des späteren Bauteils vorzuformen. Da das Hinterfüttern in dem gleichen Werkzeug erfolgt, in dem auch das eigentliche Bauteil ausgebildet wird, bezeichnet man dieses Verfahren auch als In-Mould-Verfahren. Prozesstechnisch wird die IMD-Folie von einer Rolle in das Kunststoffverarbeitungswerkzeug eingeführt und die Trägerfolie nach dem Entformen des Kunststoffbauteils auf eine weitere Rolle aufgerollt.

Meist kommen IMD-Kunststoffbauteile als Dekorbauteile beispielsweise in Kraftfahrzeugen zum Einsatz und bilden dort häufig mit einer Metalloptik oder einem sogenanntem "Klavierlack" oder ähnlichem versehene Armaturenbretter, Zierleisten und dergleichen. Die Vorteile der IMD-Kunststoffbauteile liegen dabei in den insbesondere bei der Thermoplastverarbeitung herkömmlicherweise sehr kurzen Zykluszeiten, den bei insbesondere großen Stückzahlen geringen Bauteilkosten, sowie der sehr geringen Schichtdicke der häufig teuren Dekorfarben. Aufwendige und kostenintensive Lackierschritte können bei IMD-Kunststoffbauteilen vorteilhafterweise entfallen. Im Vergleich zu einer sogenannten Insert-Technik, bei der eine Dekorfolie fest auf dem Kunststoffbauteil verbleibt, können dem Formen des Kunststoffbauteils selbst vorgelagerte Bearbeitungsschritte wie insbesondere Umformen der Dekorfolie auf die spätere Bauteil-Oberflächenform und somit zusätzlicher Werkzeugaufwand entfallen.

Der Erfindung liegt die Aufgabe zugrunde, ein IMD-Verfahren weiter zu verbessern.

Diese Aufgabe wird erfindungsgemäß gelöst durch ein Verfahren mit den Merkmalen des Anspruchs 1. Die Aufgabe wird ebenfalls erfindungsgemäß gelöst durch eine Anlage zur Herstellung eines IMD-Kunststoffbauteils mit den Merkmalen des Anspruchs 13. Vorteilhafte und teils für sich erfinderische Ausführungsformen und Weiterbildungen der Erfindung sind in den Unteransprüchen und der nachfolgenden Beschreibung dargelegt.

Das erfindungsgemäße Verfahren dient zur Herstellung eines IMD-Kunststoffbauteils. Verfahrensgemäß wird dabei aus einer endlosen IMD-Prozessfolie (kurz: IMD-Folie), die eine Trägerfolie und ein einseitig auf dieser aufgebrachtes, transferierbares IMD-Lackpaket aufweist, ein konturnah bezüglich einer mit dem IMD-Lackpaket zu dekorierenden Oberfläche des IMD-Kunststoffbauteils zugeschnittener Folienzuschnitt vereinzelt. Der Folienzuschnitt wird anschließend in ein geöffnetes Kunststoffverarbeitungswerkzeug (vorzugsweise ein Spritzgießwerkzeug, im Folgenden kurz als "Formwerkzeug" bezeichnet) eingebracht. Anschließend wird das Formwerkzeug vollständig oder zumindest bis auf einen Resthub geschlossen. In dem (zumindest bis auf den Resthub geschlossenen) Formwerkzeug wird daraufhin eine fließfähige Kunststoffmasse auf das IMD-Lackpaket der IMD-Folie aufgebracht. Dabei wird durch die Kunststoffmasse eine Tragstruktur für das IMD-Kunststoffbauteil ausgebildet. Das IMD-Lackpaket wird dabei zur Ausbildung des IMD-Kunststoffbauteils als Dekorlage auf die Tragstruktur transferiert.

Vorzugsweise wird anschließend das Formwerkzeug geöffnet, und das IMD-Kunststoffbauteil aus dem Formwerkzeug, konkret aus einer Kavität (d. h. einem Formhohlraum zur Ausbildung des IMD-Kunststoffbauteils) des Formwerkzeugs entnommen ("entformt"). Die Trägerfolie der IMD-Folie wird während oder nach dem Entformen des IMD-Kunststoffbauteils von diesem, konkret von dem IMD-Lackpaket abgelöst.

Wie eingangs bereits beschrieben, handelt es sich bei dem IMD-Kunststoffbauteil mithin um ein Kunststoffbauteil, auf das mittels der vorstehend beschriebenen IMD-Folie ein Dekor-Lackpaket - insbesondere während der Fertigung des Kunststoffbauteils selbst - übertragen wird. Die Trägerfolie der IMD-Folie verbleibt dabei nicht auf dem IMD-Kunststoffbauteil und stellt somit auch keinen Teil desselben dar.

Unter dem Begriff "endlos" wird hier und im Folgenden insbesondere verstanden, dass das entsprechende "endlose" Element im Vergleich zu den bestimmungsgemäßen Bauteilabmessungen des mittels dieses Elements gefertigten Bauteils um ein Vielfaches - beispielsweise um wenigstens das 3-10-Fache - größere Abmessungen, insbesondere eine um ein solches größere Längserstreckung aufweist. Im Fall der vorstehend beschriebenen IMD-Folie ist diese vorzugsweise als Rollenware ausgebildet, bei der die Längserstreckung mehr als das 10-Fache, insbesondere mehr als das 50- oder 100-Fache der Abmessungen des einzelnen IMD-Kunststoffbauteils aufweisen kann.

Unter dem Begriff "konturnah" wird hier und im Folgenden verstanden, dass der jeweilige Folienzuschnitt konturgetreu bezüglich der zu dekorierenden Oberfläche (insbesondere einer Sichtfläche des späteren IMD-Kunststoffbauteils) zuzüglich eines prozessbedingten Materialzuschlags (auch als "randseitiger Überstand" oder "Offset" bezeichnet) ausgeformt wird. Der Materialzuschlag dient hierbei insbesondere dazu, eine hinreichende Dehnung der vorzugsweise in prozesstechnisch erforderlichen Grenzen elastischen, insbesondere fließfähigen IMD-Folie bei einem häufig bei der Herstellung von IMD-Kunststoffbauteilen erfolgenden "Tiefziehschritt", d. h. einem (insbesondere dreidimensionalen) Umformen der IMD-Folie zu ermöglichen. Insbesondere ist dieser Materialzuschlag hierbei derart bemessen, dass sich der jeweilige Folienzuschnitt während eines solchen Umformschritts hinreichend an die zu dekorierende, in diesem Fall dreidimensionale Sichtfläche anlegen kann, indem Material aus dem randseitigen Überstand durch Dehnung oder Verstreckung eingezogen werden kann, ohne dass es zu Fehlern, bspw. Dekorverzug, Reißen des Dekors, Faltenwurf, Lücken im Dekor oder dergleichen kommt. Die Abmessungen des randseitigen Überstands werden in Abhängigkeit von einer "Tiefe" der zu dekorierenden dreidimensionalen Struktur der Sichtfläche bestimmt und vorgegeben. Insbesondere wird hierbei der Überstand bei zunehmender Tiefe der Struktur ebenfalls größer vorgegeben, selbst wenn eine auf die Ebene der IMD-Folie projizierte Grundfläche der Struktur gleich bleibt. Zudem dient der randseitige Überstand insbesondere auch zum Halten, vorzugsweise zum Klemmen (oder: "Spannen") des Folienzuschnitts zumindest im Kunststoffverarbeitungswerkzeug. Ein zum Halten dienender Anteil des Überstands ist dabei vorzugweise außerhalb des (oder "außenseitig" zu dem) für die Dehnung bzw. Verstreckung erforderlichen Anteils angeordnet.

Unter dem Begriff "Resthub" wird hier und im Folgenden insbesondere verstanden, dass das Formwerkzeug nicht vollständig sondern lediglich so weit geschlossen wird, dass eine Leckage der fließfähigen Kunststoffmasse aus der - insbesondere mittels zweier Werkzeughälften des Formwerkzeugs gebildeten - Kavität unterbunden ist. Dazu weist das Formwerkzeug in einer optionalen Variante eine sogenannte Tauchkante oder dergleichen auf. Ein solcher Resthub ist bspw. für einen Press- oder Prägeschritt beim oder nach dem Aufbringen der Kunststoffmasse zweckmäßig.

Vorzugsweise ist die Kavität des Formwerkzeugs durch jeweils eine, auf einer Werkzeughälfte ausgeformte Teilkavität (die insbesondere jeweils durch eine Werkzeugfläche begrenzt wird) gebildet. Grundsätzlich kann eine der beiden Werkzeugflächen dabei auch als vorspringende (konvexe) Struktur auf einer Werkzeughälfte ausgebildet sein, die im geschlossenen Zustand des Formwerkzeugs zumindest teilweise in eine durch die andere Werkzeugfläche begrenzte Vertiefung (die die andere Teilkavität darstellt) hineinragt.

Unter einer "fließfähigen Kunststoffmasse" wird hier und im Folgenden insbesondere eine flüssige Formmasse verstanden, die durch Erstarrung die durch Kunststoff gebildete Tragstruktur ausbildet. In einer zweckmäßigen Verfahrensvariante handelt es sich bei der fließfähigen Kunststoffmasse um eine thermoplastische Kunststoffschmelze. In einer alternativen Verfahrensvariante wird eine flüssige Mischung reaktiver Komponenten eines vernetzenden, insbesondere duroplastischen Kunststoffs, optional auch eines reaktiven Kunststoffschaums herangezogen.

Dadurch, dass erfindungsgemäß konturnah vereinzelte Folienzuschnitte für den IMD-Prozess verwendet werden, kann die Ausnutzung der zur Verfügung stehenden Gesamtfläche der IMD-Folie, vorteilhafterweise der gesamten Rollenbreite, insbesondere auch einer Fertigungsbreite (bspw. etwa 600 Millimeter) einer sogenannten Mutterrolle, die häufig in Abhängigkeit von dem individuellen Dekor in ihrer Breite auf eine Auslieferungsbreite zugeschnitten wird, gesteigert werden. Insbesondere können auch Folienbereiche, die ansonsten aufgrund eines Folienvorschubs ungenutzt bleiben, vorteilhafterweise verwendet werden. Somit können die Wirtschaftlichkeit und die Nachhaltigkeit (insbesondere aufgrund verringertem, ungenutztem Folien-Abfall) bei der Herstellung des IMD-Kunststoffbauteils erhöht werden. Des Weiteren kann auch Anlagenaufwand zur Zuführung der rollenförmigen IMD-Folie in das Formwerkzeug verringert werden.

Aufgrund der Verwendung der konturnahen Folienzuschnitte wird das hier und im Folgenden beschriebene, erfindungsgemäße IMD-Verfahren auch als "Kontur-IMD" bezeichnet.

In einer besonders zweckmäßigen Verfahrensvariante wird auf der endlosen IMD-Folie eine Vielzahl von Folienzuschnitten insbesondere auch quer zur Längsrichtung der Rollenbahn (zumindest abschnittsweise) nebeneinander genestet und anschließend vereinzelt. Unter dem Begriff "nesten" wird hier und im Folgenden insbesondere verstanden, dass die mehreren Folienzuschnitte hinsichtlich ihrer Außenkontur (mithin unter Berücksichtigung des Offsets) unter möglichst hoher Ausnutzung der auf der IMD-Folie (insbesondere der diese bildenden Rollenbahn) zur Verfügung stehenden Fläche - d. h. unter Verringerung eines zwischen den einzelnen Folienzuschnitten anfallenden Verschnitts - insbesondere unter unterschiedlicher Ausrichtung der einzelnen Folienzuschnitte verteilt (auch: "verschachtelt") werden. Je nach Art des durch das IMD-Lackpaket gebildeten Dekors können in einer optionalen Untervariante auch unterschiedliche Zuschnittgeometrien, die beispielsweise zur Dekorierung hinsichtlich ihrer Geometrie unterschiedlicher IMD-Kunststoffbauteile dienen, auf der IMD-Folie nebeneinander genestet werden. Dadurch kann beispielsweise eine noch effizientere Nutzung der gesamten Fläche der IMD-Folie erreicht werden. Vorzugsweise wird in dieser Verfahrensvariante eine IMD-Folie mit einem über ihre gesamte Fläche einheitlichen Dekor, beispielsweise einer einheitlichen Farbgebung und/oder eines einheitlichen Musters herangezogen.

In einer optionalen Verfahrensvariante - auch als "Einzelbild-Kontur-IMD" bezeichnet - wird für jeden wie vorstehend beschrieben genesteten Folienzuschnitt das zugeordnete Muster (d. h. das Dekor) mittels separaten Auftrags des IMD-Lackpakets auf die Trägerfolie (und somit lokal unterschiedlich) ausgebildet. Beispielsweise werden hierbei einzelne "Farbfelder", die der Außenkontur des jeweiligen Folienzuschnitts oder zumindest der zu dekorierenden Oberfläche des Kunststoffbauteils entsprechen, nach der ("virtuellen" oder geplanten) Verteilung der Folienzuschnitte auf der IMD-Folie mit den gegebenenfalls mehreren Schichten des jeweiligen IMD-Lackpakets bedruckt und die Folienzuschnitte hiernach vereinzelt. Der randseitige Überstand wird dabei optional nicht bedruckt, d. h. freigelassen. Weiter optional werden insbesondere mittels Digitaldruck auch unterschiedliche Einzelbild-Dekore auf die Trägerfolie aufgebracht.

In jedem Fall (d. h. sowohl bei vollflächig bedruckter als auch bei mit Einzelbildern bedruckter IMD-Folie) kann somit der Materialaufwand zumindest der Trägerfolie der IMD-Folie verringert und somit die Wirtschaftlichkeit bei der Herstellung des IMD-Kunststoffbauteils gesteigert werden. Beim Einzelbild-Kontur-IMD kann darüber hinaus auch Lack eingespart werden, da nur relevante Bereiche der IMD-Folie bedruckt werden.

In einer zweckmäßigen Verfahrensvariante wird der jeweilige Folienzuschnitt vor dem Einbringen in das Kunststoffverarbeitungswerkzeug mittels eines Handhabungswerkzeugs aufgenommen. Vorzugsweise werden außerdem zunächst mehrere Folienzuschnitte in einem Magazin (oder einer Kassette) angeordnet, aus dem die Folienzuschnitte dann unmittelbar vor der Fertigung des jeweiligen IMD-Kunststoffbauteils mittels des Handhabungswerkzeugs einzeln aufgenommen, konkret entnommen werden. Die Verwendung des Handhabungswerkzeugs ermöglicht dabei eine insbesondere zur Serienfertigung des IMD-Kunststoffbauteils vorteilhafte Automatisierung.

In einer zweckmäßigen Weiterbildung der vorstehend beschriebenen Verfahrensvariante bildet das Handhabungswerkzeug vorzugsweise einen vom Formwerkzeug separaten Spannrahmen. Mittels dieses Spannrahmens wird der Folienzuschnitt beim Einbringen in das Formwerkzeug gegenüber der Kavität des Formwerkzeugs ausgerichtet, d. h. insbesondere bezüglich des Dekors des IMD-Lackpakets und der Außenkontur der zu dekorierenden Sichtfläche positioniert und vorzugsweise auch zentriert. Vorzugsweise erfolgt das Ausrichten dabei konkret gegenüber einer an einer sogenannten dekorseitigen Werkzeughälfte (im Folgenden als "Werkzeug-Dekorseite" bezeichnet) des Formwerkzeugs ausgebildeten Teilkavität (die die Sichtfläche ausformende Oberfläche des Formhohlraums bildet). Optional kann das Ausrichten auch gegenüber einer (der Werkzeug-Dekorseite gegenüberliegenden) "rückseitigen" Werkzeughälfte erfolgen. Vorzugsweise wird der jeweilige Folienzuschnitt mittels dieses Spannrahmens auch im Formwerkzeug in seiner bestimmungsgemäßen Ausrichtung "festgehalten", vorzugsweise gegen eine der Werkzeughälften, insbesondere gegen die Werkzeug-Dekorseite geklemmt. Durch die gleichzeitige Nutzung des Handhabungswerkzeugs als Spannrahmen für den - vorzugsweise als Spritzgieß-Prozess ausgebildeten - Kunststoffverarbeitungsprozess (d. h. vor dem Einbringen der Kunststoffmasse in das Formwerkzeug zur Ausbildung der Tragstruktur und gegebenenfalls der nachfolgenden Abkühlung) wird vorteilhafterweise eine Vereinfachung der Anlagentechnik ermöglicht. Optional werden mehrere derartige Handhabungswerkzeuge gemeinsam mit (insbesondere "nur") einem Formwerkzeug eingesetzt, beispielsweise indem mittels eines zweiten Handhabungswerkzeugs der nächste Folienzuschnitt bereits aufgenommen wird, während der erste Folienzuschnitt mittels des anderen, ersten Handhabungswerkzeugs in dem Formwerkzeug gehalten oder nach dem Öffnen des Formwerkzeugs entfernt wird.

In einer alternativen Verfahrensvariante wird der mittels des Handhabungswerkzeugs aufgenommene Folienzuschnitt von diesem Handhabungswerkzeug an einen werkzeugseitigen - d. h. insbesondere als Teil des Formwerkzeugs ausgebildeten und vorzugsweise zwischen den beiden Werkzeughälften dieses Formwerkzeugs insbesondere beweglich angeordneten - Spannrahmen übergeben. Mittels dieses werkzeugseitigen Spannrahmens wird der Folienzuschnitt anschließend gegenüber der Kavität des Formwerkzeugs insbesondere während der Ausbildung der Tragstruktur gehalten (vorzugsweise geklemmt). Eine Ausrichtung des Folienzuschnitts erfolgt optional bereits bei der Übergabe an den Spannrahmen. Das Handhabungswerkzeug stellt in dieser Verfahrensvariante insbesondere einen Greifer dar. Der werkzeugseitige Spannrahmen ist in dieser Verfahrensvariante zweckmäßigerweise als eine Art "Voreiler" ausgebildet, d. h. insbesondere mittels Federelementen (hydraulischen, mechanischen oder pneumatischen Federn) beweglich an einer der Werkzeughälften, insbesondere der rückseitigen (vorzugsweise der "feststehenden") Werkzeughälfte angeordnet. Dadurch kommt beim Schließen der Formwerkzeugs zunächst der Folienzuschnitt, insbesondere mit der Trägerfolie mit der anderen Werkzeughälfte, insbesondere der Werkzeug-Dekorseite, in Kontakt und die Klemmkraft wird aufgebaut. Ein Umformen erfolgt in diesen Fall zweckmäßigerweise während einer Pause der Schließbewegung, zu der die Klemmkraft für ein Umformen hinreichend hoch ist. Anschließend wird das Formwerkzeug vollständig geschlossen und anschließend die Kunststoffmasse eingebracht. Bei dieser Verfahrensvariante wird der Folienzuschnitt also von dem Greifer an der Trägerfolie aufgenommen und mit der Lackseite an den Spannrahmen übergeben. Die Übergabe erfolgt optional durch einen Druckluftstoß des Greifers.

In einer bevorzugten Verfahrensvariante wird der oder der jeweilige Folienzuschnitt mittels des Handhabungswerkzeugs und/oder des werkzeugseitigen Spannrahmens konturfolgend gehalten. Das Handhabungswerkzeug bzw. der werkzeugseitige Spannrahmen sind mithin insbesondere derart geformt, dass der Folienzuschnitt entlang seiner Außenkontur, vorzugsweise innerhalb des randseitigen Überstands (d. h. des Offsets) gehalten wird. Vorzugsweise ist das Handhabungswerkzeug bzw. der Spannrahmen derart schmal gestaltet, dass der Folienzuschnitt zweckmäßigerweise nur im Bereich des Offsets und dabei auch möglichst nahe zum Außenrand gehalten wird. Zum Halten (Greifen) des jeweiligen Folienzuschnitts weisen das Handhabungswerkzeug und/oder der Spannrahmen beispielsweise Saugnäpfe auf, die optional mit einer Unterdruckleitung gekoppelt sind, oder eine konturfolgend ausgebildete Halterinne, die ebenfalls mit einer Unterdruckleitung zum "Ansaugen" und somit zum durch Unterdruck unterstützten Halten des jeweiligen Folienzuschnitts dient. Weiter optional sind das Handhabungswerkzeug und/oder der jeweilige Spannrahmen zum elektrostatischen Aufnehmen bzw. Halten des Folienzuschnitts eingerichtet.

Um insbesondere bewegte Massen beim Aufnehmen und Einbringen des jeweiligen Folienzuschnitts in das Formwerkzeug gering zu halten, ist das Handhabungswerkzeug in einer bevorzugten Ausführung als Faserverbundelement, bspw. als duroplastisches oder thermoplastisches, insbesondere endlosfaserverstärktes Faserverbundbauteil ausgebildet. Vorzugsweise weist dieses Faserverbundbauteil zudem auch eine Leichtbaustruktur, bspw. eine sogenannte Skelettierung auf. Zusätzlich oder alternativ ist auch der werkzeugseitige Spannrahmen als ein solches Faserverbundbauteil ausgebildet.

Um insbesondere für ein optionales Umformen des jeweiligen Folienzuschnitts vor dem Aufbringen der Kunststoffmasse, insbesondere mittels durch eine Druckdifferenz (vorzugsweise durch Unterdruck) unterstützten Tiefziehens, eine hinreichende Abdichtung zwischen dem Folienzuschnitt und der korrespondierenden Werkzeughälfte (insbesondere der Werkzeug-Dekorseite) des Formwerkzeugs zu ermöglichen, wird in einer zweckmäßigen Verfahrensvariante der Folienzuschnitt mittels des separaten oder des werkzeugseitigen Spannrahmens mit seiner dem IMD-Lackpaket abgewandten Seite (somit mit der Trägerfolie) an eine Dichtfläche (als "Dichtkontur" bezeichnet) des Formwerkzeugs angedrückt. Insbesondere weist der separate oder der werkzeugseitige Spannrahmen hierzu eine Schließkontur auf, die ringartig der Außen- oder Randkontur des Folienzuschnitts folgend an dem Spannrahmen angeordnet ist. Vorzugsweise wird als eine solche Schließkontur eine auch als "Andrückring" bezeichnete Dichtschnur, eine Dichtrippe oder ein vergleichbares, optional nachgiebiges, Element herangezogen. Mittels dieser (insbesondere ringartig geschlossenen, optional auch geöffneten) Schließkontur wird somit beim Anlegen des Spannrahmens an die korrespondierende Werkzeughälfte der Folienzuschnitt in einem umlaufenden Randbereich (wie vorstehend beschrieben bevorzugt im (Rand-)Bereich des Offsets) linienförmig und zumindest bei Nutzung der nachgiebig gestalteten Schließkontur unter näherungsweise gleichmäßigen Druck an die Dichtfläche des Formwerkzeugs angedrückt. In einer optionalen Variante ist die Schließkontur des Spannrahmens steif, insbesondere aus dem gleichen Material wie der gesamte Spannrahmen ausgebildet, und die Dichtfläche des Formwerkzeugs ist durch eine nachgiebige Struktur, beispielsweise die vorstehend genannte Dichtschnur ausgebildet. Für den Fall, dass die Schließkontur keinen geschlossenen Ring bildet, erfolgt die Abdichtung insbesondere über die Dichtkontur des Formwerkzeugs, die bspw. als Kante oder ein vergleichbares Dichtelement ausgebildet ist. Optional wird die Abdichtung hierbei durch einen zwischen den Folienzuschnitt und die entsprechende Teilkavität angelegten Unterdruck unterstützt. Optional ist die Dichtkontur dabei durch eine Rinne zwischen zwei Dichtwülsten (bspw. jeweils eine Dichtschnur) gebildet, wobei die Rinne eine bspw. gefräste Nut in der entsprechenden Werkzeughälfte oder "nur" ein zwischen den beiden Dichtwülsten gebildetes Tal (also ohne gefräste Nut) darstellt. In der Rinne sind ist dabei vorzugsweise außerdem eine Bohrung zum Anlegen des Unterdrucks angeordnet.

Zur (zumindest teilweisen) Umformung des Folienzuschnitts wird in einer zweckmäßigen Verfahrensvariante insbesondere nach dem Andrücken der IMD-Folie an das Formwerkzeug zwischen der IMD-Folie (konkret der Trägerfolie) und dem Formwerkzeug eine Druckdifferenz aufgebracht. Vorzugsweise wird hierbei zwischen insbesondere der Werkzeug-Dekorseite und dem Folienzuschnitt ein Unterdruck angelegt, unter dessen Wirkung die IMD-Folie zumindest größtenteils an die Oberfläche der dekorseitigen Teilkavität angelegt wird. Optional wird die IMD-Folie dabei nur teilweise, d. h. insbesondere nicht vollflächig an die Oberfläche der korrespondierenden Teilkavität angelegt. Ein restliches, "vollständiges" Anformen der IMD-Folie an die dekorseitige Teilkavität erfolgt in diesem Fall unter Wirkung des Drucks der eingebrachten Kunststoffmasse, optional auch der Temperatur insbesondere im Fall von thermoplastischer Kunststoffschmelze. Die Druckdifferenz, insbesondere der Unterdruck wird dabei vor, während oder nach dem Schließen des Formwerkzeugs aufgebracht. Optional wird alternativ oder zusätzlich zu dem Unterdruck bspw. mittels einer Druckglocke ein Überdruck aufgebracht. In diesem Fall weist die Werkzeug-Dekorseite Entlüftungsbohrungen auf. Weiter optional ist in diese Druckglocke eine Heizvorrichtung integriert.

Zur Unterstützung der Umformung wird in einer zweckmäßigen Verfahrensvariante der Folienzuschnitt vorgewärmt. Somit handelt es sich in diesem Fall um ein Thermoformen des Folienzuschnitts. Bspw. wird der Folienzuschnitt hierbei mittels Infrarotstrahlern oder eines Heizgebläses vor dem Einbringen in das Formwerkzeug oder auch bereits im Formwerkzeug vorgewärmt.

Vorzugsweise wird der separate oder auch werkzeugseitige Spannrahmen im Formwerkzeug auf Führungsstangen geführt und im Formwerkzeug gehalten. Diese Führungsstangen bewirken dabei auch die Positionierung des Folienzuschnitts gegenüber der Kavität. Alternativ wird der jeweilige Spannrahmen durch magnetische, elektromagnetische oder hydraulische Halterungen im Werkzeug gehalten. Im ersten Fall weist der Spannrahmen beispielsweise magnetische Teilbereiche auf, und wird mittels eines Handhabungsgeräts, beispielsweise mittels eines Industrieroboters in das Formwerkzeug eingebracht, ausgerichtet und mittels im Formwerkzeug angeordneter Permanentmagnete gehaltert. Alternativ werden in das Formwerkzeug integrierte Elektromagneten aktiviert, sodass der Spannrahmen im Formwerkzeug, an der Werkzeug-Dekorseite oder der rückseitigen Werkzeughälfte gehalten wird. Im Fall der hydraulischen Halterungen kommen beispielsweise Spannklauen oder dergleichen zum Einsatz, die nach Ausrichtung des jeweiligen Spannrahmens hydraulisch betätigt werden und den jeweiligen Spannrahmen gegen die Werkzeug-Dekorseite klemmen.

In einer weiteren optionalen Verfahrensvariante wird der Folienzuschnitt von dem Handhabungswerkzeug - mithin nach dem Aufnehmen - an eine an einer Werkzeughälfte angeordnete, feststehende oder optional in Schließrichtung bewegliche Haltestruktur übergeben. Bei dieser Haltestruktur handelt es sich beispielsweise um eine Mehrzahl von einzelnen Saugnäpfen, eine Halterinne( zur umlaufenden Halterung des Folienzuschnitts mittels eines Unterdrucks) oder dergleichen. In diesem Fall kommt mithin kein Spannrahmen zum Einsatz, mittels dessen der jeweilige Folienzuschnitt während und nach dem Schließen des Formwerkzeugs in letzterem gehalten wird. Insbesondere ist diese Haltestruktur, vorzugsweise die bewegliche Haltestruktur an der rückseitigen Werkzeughälfte des Formwerkzeugs angeordnet. Für den Fall, dass es sich bei der Haltestruktur um eine unbewegliche, bspw. um die in eine der Werkzeughälften eingebrachte Halterinne handelt, ist diese optional auch an der Werkzeug-Dekorseite angeordnet. Die Halterinne ist bspw. als in eine Fläche der oder der jeweiligen Werkzeughälfte eingeformte (bspw. gefräste) Nut ausgebildet, die optional beidseitig von einer Dichtwulst aus einem zweckmäßigerweise nachgiebigen Material (bspw. einer Dichtschnur) umrandet ist. Weiter optional ist die Halterinne lediglich durch das zwischen den beiden (auf die Fläche der jeweiligen Werkzeughälfte aufgebrachten) Dichtwülsten (insbesondere jeweils einer Dichtschnur) gebildete "Tal" gebildet. Vorzugsweise ist in jeder Form der Halterinne in dieser wenigstens eine Bohrung angeordnet, über die die Halterinne mittels einer Unterdruck-Leitung bspw. mit einer VakuumPumpe in Verbindung steht.

In einer weiteren zweckmäßigen Verfahrensvariante wird der jeweilige Folienzuschnitt, insbesondere während des Nestens in Abhängigkeit von dem Dekor des IMD-Lackpakets auf der IMD-Folie ausgerichtet. So kann beispielsweise bei einem "Nadelstreifen-Dekor" (d. h. ein Dekor mit in einer Richtung parallel verlaufenden - optional vergleichsweise schmalen - Streifen) der jeweilige Folienzuschnitt nur in zwei um 180 Grad zueinander versetzten Ausrichtungen auf der IMD-Folie positioniert werden. Im Fall eines einheitlichen, einfarbigen Dekors kann der jeweilige Folienzuschnitt dagegen frei gegenüber der IMD-Folie gedreht werden. Gegebenenfalls ist aber auch keine Drehung des Folienzuschnitts, oder auch nur eine um jeweils 90 Grad verdrehte Ausrichtung möglich.

In einer weiteren zweckmäßigen Verfahrensvariante wird ein Formwerkzeug mit mehreren Kavitäten herangezogen. In dieses werden mehrere Folienzuschnitte zur Formgebung mehrerer IMD-Kunststoffbauteile parallel (d. h. insbesondere zeitgleich) in jeweils eine der Kavitäten des Formwerkzeugs eingebracht. Optional wird für jeden Folienzuschnitt dabei ein separat zugeordnetes Handhabungswerkzeug (gegebenenfalls auch ein separat zugeordneter Spannrahmen) herangezogen. Dadurch kann vorteilhafterweise der Durchsatz oder "Ausstoß" bei nur einem Formwerkzeug erhöht werden. In diesem Fall liegt der Vorteil aber nicht nur darin, dass die Ausnutzung der gesamten IMD-Folie verbessert wird. Aufgrund der Verwendung einzelner Folienzuschnitte wird bei mehreren Kavitäten auch eine "Kommunikation" der jeweiligen, einem Kunststoffbauteil zugeordneten Folienbereiche untereinander vermieden. Insbesondere kann somit für jedes Bauteil die Dehnung beim Umformen eigenständig ablaufen, ohne dass - bei einer zusammenhängenden Folie über mehrere Kavitäten hinweg - sich die einzelnen Dehnungen gegenseitig beeinflussen und somit Dekor verzerrt wird oder dergleichen.

Die erfindungsgemäße Anlage zur Herstellung des vorstehend beschriebenen IMD-Kunststoffbauteils ist konkret zur Durchführung des vorstehend beschriebenen Verfahrens eingerichtet. Die Anlage weist somit die im Rahmen des vorstehend beschriebenen Verfahrens beschriebenen Merkmale und Vorteile gleichermaßen auf. Die Anlage umfasst konkret eine Kunststoffverarbeitungsmaschine sowie das vorstehend beschriebene Formwerkzeug, das die Kavität zur Ausbildung des IMD-Kunststoffbauteils aufweist und vorzugsweise auf der Kunststoffverarbeitungsmaschine angeordnet ist. Die Kunststoffverarbeitungsmaschine - insbesondere eine Spritzgießmaschine für Thermoplaste, Duroplaste oder Schäume, eine Kunststoffpresse oder dergleichen - dient dabei auch zur Handhabung des Formwerkzeugs, d. h. konkret zum Öffnen und Schließen, sowie zum Einbringen der Kunststoffmasse in die (oder die jeweilige) Kavität und auf die IMD-Folie. Des Weiteren umfasst die Anlage vorzugsweise auch ein das Handhabungswerkzeug tragendes Handhabungsgerät, vorzugsweise einen Industrieroboter, einen Portalgreifer, eine Kulissenführung oder dergleichen.

In einer optionalen Ausführung weist die Anlage auch das vorstehend beschriebene Magazin zur Aufnahme der vereinzelten Folienzuschnitte auf. Optional ist der Anlage auch eine Vereinzelungseinrichtung, beispielsweise ein sogenannter Cutter, insbesondere ein CNC-Cutter (der wiederum bspw. über eine Ultraschallklinge, einen Laser, eine Ziehklinge, eine Wasserstrahl-Schneiddüse oder dergleichen verfügt) zur Vereinzelung des jeweiligen Folienzuschnitts aus der IMD-Folie zugeordnet.

Wie vorstehend beschrieben ist das Handhabungswerkzeug und\oder der Spannrahmen vorteilhafterweise konturfolgend zu dem Folienzuschnitt und somit auch zur Kavität des Formwerkzeugs ausgebildet. Optional ist der Spannrahmen - insbesondere um eine Vorformung oder einen vergleichsweise hohen Umformungsgrad zu ermöglichen - klappbar, d. h. insbesondere quer zu einer Ebene des Folienzuschnitts gelenkig, ausgestaltet.

Die Konjunktion "und/oder" ist hier und im Folgenden insbesondere derart zu verstehen, dass die mittels dieser Konjunktion verknüpften Merkmale oder Begriffe sowohl gemeinsam als auch als Alternativen zueinander ausgebildet sein bzw. auftreten können.

Nachfolgend werden Ausführungsbeispiele der Erfindung anhand einer Zeichnung näher dargestellt. Darin zeigen:
- Fig. 1: in einer schematischen Draufsicht ein Teilstück einer IMD-Prozessfolie,
- Fig. 2: in Ansicht gemäß Fig. 1 die IMD-Prozessfolie mit darauf angeordneten und verteilten Außenkonturen unterschiedlicher Folienzuschnitte,
- Fig. 3: einen aus der IMD-Prozessfolie vereinzelten Folienzuschnitt,
- Fig. 4: in einer schematischen Seitenansicht ein weiteres Ausführungsbeispiel des Folienzuschnitts sowie ein Handhabungswerkzeug, das zum Aufnehmen des Folienzuschnitts dient,
- Fig.5: in Ansicht gemäß Fig. 4 das Handhabungswerkzeug, das den Folienzuschnitt aufgenommen hat,
- Fig. 6: in einer perspektivischen Ansicht das Handhabungswerkzeug mit dem aufgenommenen Folienzuschnitt,
- Fig. 7-10: jeweils in schematischer Seitenansicht ein Kunststoffverarbeitungswerkzeug, bei dem das Handhabungswerkzeug als Spannrahmen für den jeweiligen Folienzuschnitt verwendet wird, in unterschiedlichen Prozessphasen zur Fertigung eines IMD-Kunststoffbauteils,
- Fig. 11,12: jeweils in Ansicht gemäß Fig. 7 ein alternatives Ausführungsbeispiel des Kunststoffverarbeitungswerkzeugs in unterschiedlichen Prozessphasen, und
- Fig. 13: in Ansicht gemäß Fig. 3 ein weiteres Ausführungsbeispiel zweier Folienzuschnitte, die für unterschiedlich stark dreidimensional geformte IMD-Kunststoffbauteile gleicher Grundfläche vorgesehen sind.

Einander entsprechende Teile sind in allen Figuren stets mit gleichen Bezugszeichen versehen.

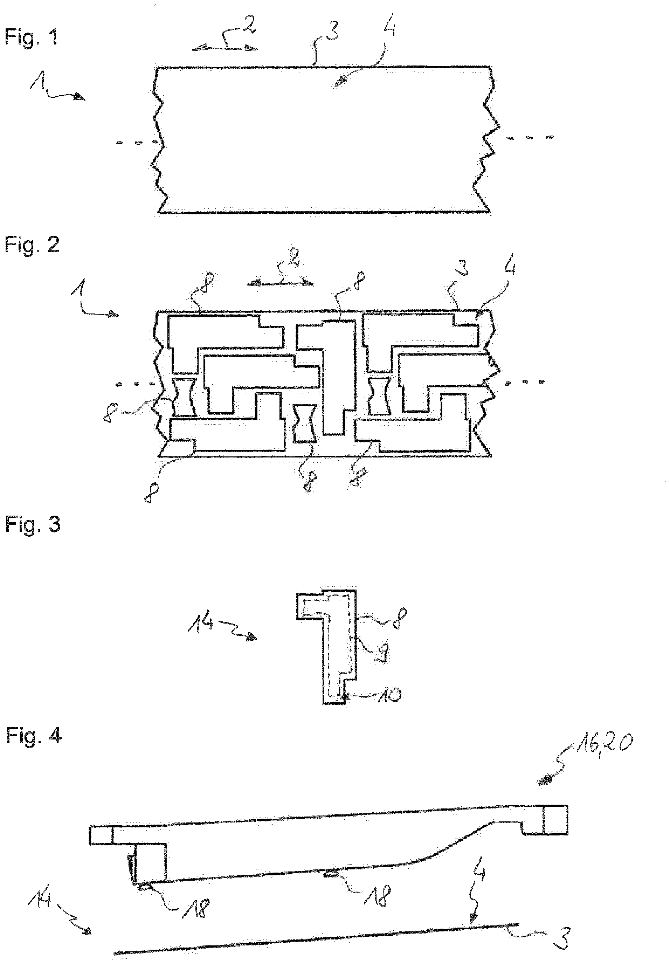

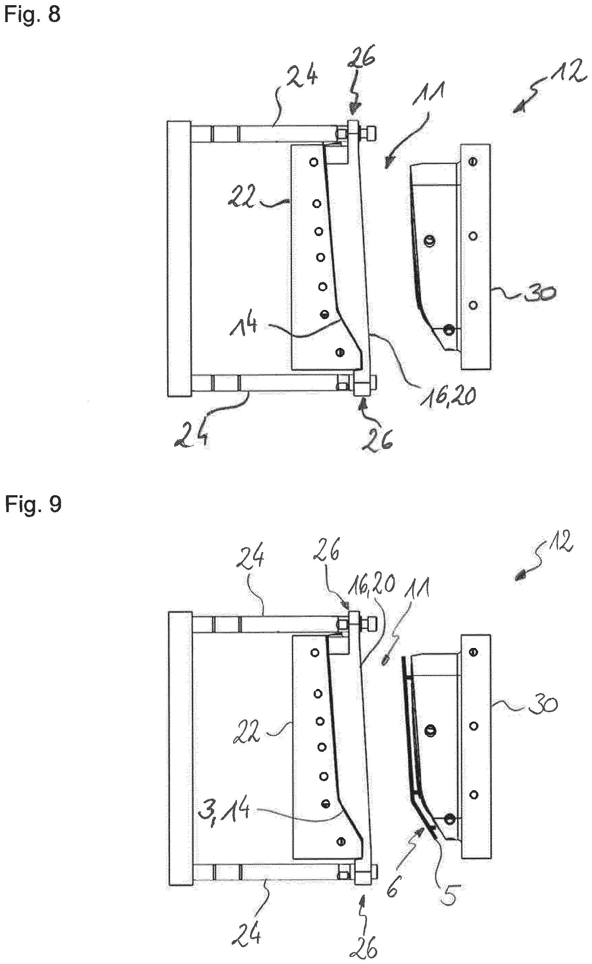

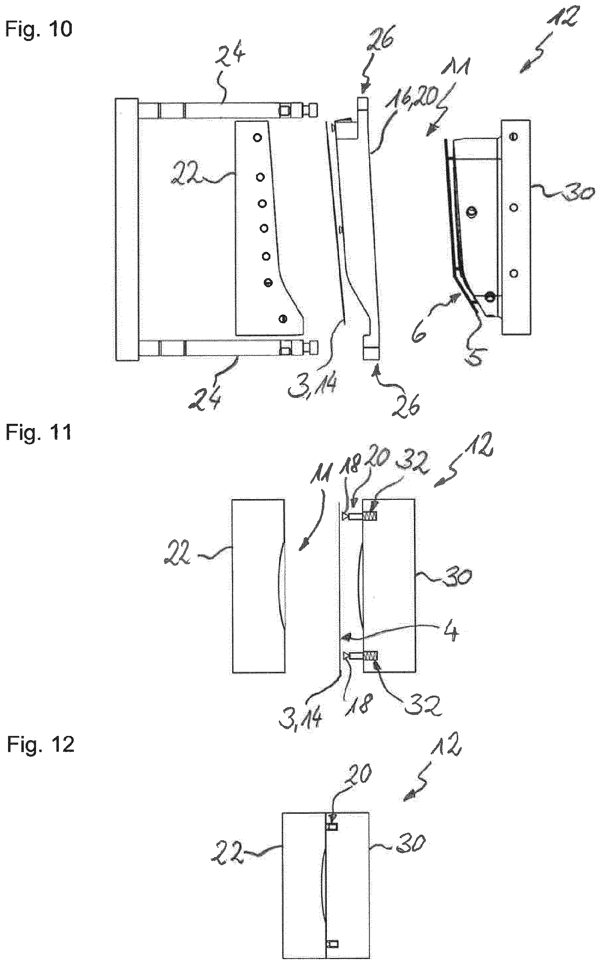

In Fig. 1 ist eine IMD-Prozessfolie (kurz: "IMD-Folie 1") dargestellt. Bei der IMD-Folie 1 handelt es sich um endlose Rollenware. In Fig. 1 ist dabei konkret nur ein Teil (Ausschnitt) einer gesamten Rollenbahn, die sich entlang einer Längsrichtung 2 erstreckt, dargestellt. Die IMD-Folie 1 weist eine Trägerfolie 3 auf, auf die auf einer Vorderseite 4 (auch: "Lackseite") ein IMD-Lackpaket (nicht näher dargestellt) aufgebracht ist. Das IMD-Lackpaket dient bei der Herstellung eines IMD-Kunststoffbauteils 5 (s. Fig. 9, 10) zur Ausbildung einer Dekorlage auf einer im bestimmungsgemäßen Einsatzzustand des IMD-Kunststoffbauteils 5 sichtbaren Oberfläche. Diese Oberfläche wird im Folgenden auch als "Sichtfläche 6" bezeichnet. Konkret wird das IMD-Lackpaket in einem sogenannten IMD-Prozess durch Aufbringen einer fließfähigen Kunststoffmasse, im vorliegenden Ausführungsbeispiel konkret einer thermoplastischen Kunststoffschmelze auf die Vorderseite 4 der IMD-Folie 1, konkret also auf das IMD-Lackpaket selbst, auf eine durch die Kunststoffschmelze nach deren Abkühlung und Erstarrung gebildete Tragstruktur transferiert. Die Trägerfolie 3 wird dabei von dem IMD-Lackpaket gelöst und verbleibt somit nicht auf dem durch die Trägerstruktur und das auf diese transferierte IMD-Lackpaket gebildete IMD-Kunststoffbauteil 5.

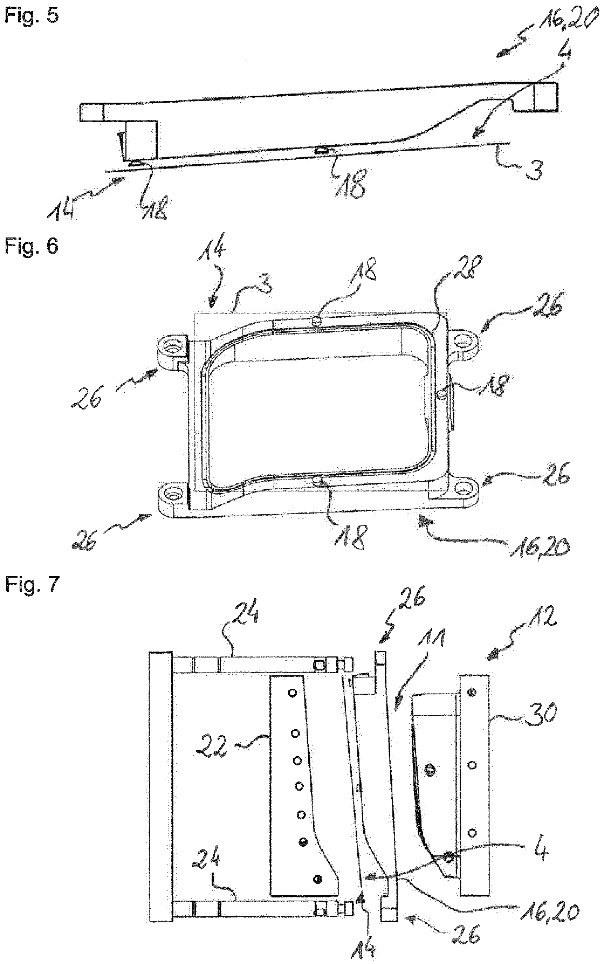

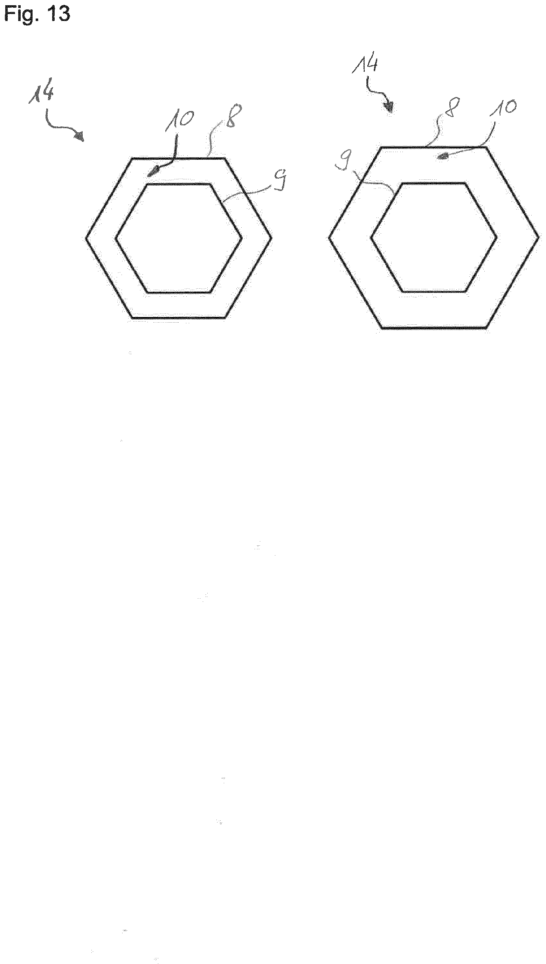

Um den IMD-Prozess wirtschaftlicher zu gestalten, wird ein im Folgenden näher beschriebenes Verfahren zur Herstellung des IMD-Kunststoffbauteils 5 durchgeführt. Dazu wird zunächst eine Außenkontur 8 eines Folienbereichs bestimmt, der zur Dekorierung der Sichtfläche 6 erforderlich ist. Diese Außenkontur 8 wird dabei in Bezug auf die mit dem IMD-Lackpaket zu dekorierende Sichtfläche 6 des IMD-Kunststoffbauteils 5 konturnah gestaltet. Konkret entspricht diese Außenkontur 8 dabei einer Randkontur 9 (s. Fig. 3, 13) der Sichtfläche 6 zuzüglich eines (Material-)Zuschlags 10, der für eine Dehnung der IMD-Folie 1 bei einer dreidimensionalen Ausformung zumindest eines Teils einer Kavität 11 eines Kunststoffverarbeitungswerkzeugs, kurz als "Formwerkzeug 12" bezeichnet (s. Fig. 7), erforderlich ist. Der Zuschlag 10 bildet somit einen randseitigen Überstand oder "Offset". Eine Vielzahl von Außenkonturen 8 wird im Rahmen eines virtuellen (konkret eines CAD-) Modells unter Ausnutzung möglichst der gesamten auf der IMD-Folie 1 zur Verfügung stehenden Fläche verteilt angeordnet und unterschiedlich ausgerichtet. Dieser Schritt der Anordnung der mehreren Außenkonturen 8 auf der IMD-Folie 1 wird auch als "Nesten" bezeichnet.

Wie in Fig. 2 dargestellt werden in einem optionalen Ausführungsbeispiel auch unterschiedliche Außenkonturen 8 für unterschiedliche IMD-Kunststoffbauteile 5 (d. h. Bauteile mit einer unterschiedlichen Sichtflächen-Geometrie) auf der IMD-Folie 1 angeordnet.

Diese auf der IMD-Folie 1 positionierten Außenkonturen 8 werden in einem nachfolgenden Verfahrensschritt mittels einer Schneidevorrichtung, konkret eines CNC-Cutters zu voneinander separaten Folienzuschnitten 14 (siehe Fig. 3) vereinzelt. D. h. die Folienzuschnitte 14 werden entlang der jeweiligen Außenkontur 8 aus der IMD-Folie 1, konkret aus der diese bildenden Rollenbahn ausgeschnitten.

In einem optionalen Ausführungsbeispiel werden die ausgeschnittenen Folienzuschnitte 14 einer Qualitätskontrolle - konkret mittels eines optischen Scanners - unterzogen und anschließend entsprechend ihrem Dekor und/oder ihrer Außenkontur 8 zueinander ausgerichtet aufeinander gestapelt. Die vereinzelten Folienzuschnitte 14 werden dabei in einer Kassette (einem "Magazin") abgelegt.

In einem in den Fig. 4-6 (anhand eines alternativen Ausführungsbeispiels des Folienzuschnitts 14) dargestellten Verfahrensschritt wird der jeweilige Folienzuschnitt 14 mittels eines Handhabungswerkzeugs 16 aufgenommen. Dazu ist das Handhabungswerkzeug 16 an die Außenkontur 8 des Folienzuschnitts 14 angepasst, mithin ringartig der Außenkontur 8 des Folienzuschnitts 14 folgend ausgestaltet. Der Übersichtlichkeit halber ist die Außenkontur 8 im vorliegenden Ausführungsbeispiel lediglich rechteckig dargestellt. Außerdem weist das Handhabungswerkzeug 16 mehrere Saugnäpfe 18 auf, die im bestimmungsgemäßen Einsatzzustand entlang einem Randbereich (konkret innerhalb des Zuschlags 10) des jeweiligen Folienzuschnitts 14 an diesem anliegen. Konkret greift das Handhabungswerkzeug 16 den Folienzuschnitt 14 mittels der Saugnäpfe 18 auf der das IMD-Lackpaket tragenden Vorderseite 4. Die Saugnäpfe 18 sind in nicht näher dargestellter Weise mit einer Unterdruckleitung verbunden, so dass ein zum Greifen und Halten erforderlicher Unterdruck an den Saugnäpfen 18 wahlweise aktiviert oder deaktiviert werden kann.

Im in den Fig. 4-6 dargestellten Ausführungsbeispiel bildet das Handhabungswerkzeug 16 gleichzeitig einen Spannrahmen 20, mittels dessen der Folienzuschnitt 14 in einem nachfolgenden Verfahrensschritt in das Formwerkzeug 12 eingebracht wird (s. Fig. 7). Während der Aufnahme des Folienzuschnitts 14 wird das Handhabungswerkzeug 16 bzw. der Spannrahmen 20 mittels eines Industrieroboters "manipuliert", d. h. bewegt.

Der Folienzuschnitt 14 wird anschließend gegenüber der Kavität 11, konkret gegenüber einer als Werkzeug-Dekorseite 22 bezeichneten Werkzeughälfte des Formwerkzeugs 12 ausgerichtet. Bei der Werkzeug-Dekorseite 22 handelt es sich dabei um die Werkzeughälfte, deren Teil der Kavität 11 (im Folgenden auch: "Teilkavität") zur Abformung der Sichtfläche 6 ausgebildet ist. Zur Ausrichtung des Spannrahmens 20 und somit auch des jeweiligen Folienzuschnitts 14 gegenüber der Kavität 11 wird der Spannrahmen 20 auf Führungsstangen 24 - konkret mittels korrespondierender Ösen 26 - aufgesetzt.

Anschließend wird der Spannrahmen 20 gegen die Werkzeug-Dekorseite 22 verfahren und angedrückt. Dabei wird der Folienzuschnitt 14 mit seiner Rückseite, d. h. mit der Trägerfolie 3 gegen eine um den an der Werkzeug-Dekorseite 22 ausgebildeten Teil der Kavität 11 umlaufende Dichtkontur, die an der Werkzeug-Dekorseite 22 angeordnet ist (nicht näher dargestellt), angedrückt. Bei dieser Dichtkontur handelt es sich in diesem Ausführungsbeispiel um eine Kante oder Rippe, die von der Werkzeug-Dekorseite 22 geringfügig vorsteht. Um ein gleichmäßiges Anlegen des Folienzuschnitts 14 an diese Dichtkontur zu ermöglichen, ist an dem Spannrahmen 20 konturfolgend eine Schließkontur in Form einer Dichtschnur, konkret eine Art elastischer Dichtring angeordnet. In Fig. 6 ist eine Haltenut 28 für diese Dichtschnur dargestellt. In einem alternativen Ausführungsbeispiel ist die Dichtkontur durch die Dichtschnur gebildet und der Spannrahmen 20 weist als Schließkontur eine korrespondierende Rippe auf.

Anschließend wird mittels eines Heizstrahlers (konkret ein Infrarotstrahler) der Folienzuschnitt 14 erwärmt und anschließend mittels einer nicht näher dargestellten Absaugvorrichtung, konkret eine Vakuumpumpe mit zugeordneten Saugleitungen, zwischen der in der Werkzeug-Dekorseite 22 ausgebildeten Teilkavität der Kavität 11 und dem Folienzuschnitt 14 eine Druckdifferenz, konkret ein Unterdruck aufgebaut, sodass sich der Folienzuschnitt 14 an die Oberfläche der Teilkavität "anlegt" und an dieser gehalten wird. Die Dichtkontur und die Schließkontur halten dabei den Folienzuschnitt 14 und ermöglichen eine Abdichtung des Zwischenraums zwischen dem Folienzuschnitt 14 und der Werkzeug-Dekorseite 22.

Anschließend (oder in einem optionalen Ausführungsbeispiel auch zeitgleich) wird eine als Werkzeug-Rückseite 30 bezeichnete zweite Werkzeughälfte des Formwerkzeugs 12 in Richtung auf die Werkzeug-Dekorseite 22 verfahren und somit das Formwerkzeug 12 geschlossen. Eine das Formwerkzeug 12 tragende Kunststoffverarbeitungsmaschine, die Teil einer Anlage zur Herstellung des IMD-Kunststoffbauteils 5 ist und konkret durch eine Spritzgießmaschine gebildet ist, ist in den Figuren 1 bis 13 nicht näher dargestellt.

Nach dem Schließen des Formwerkzeugs 12 wird eine thermoplastische Kunststoffschmelze in die Kavität 11, konkret auf das IMD-Lackpaket und somit auf die Vorderseite 4 des Folienzuschnitts 14 aufgebracht. Durch die Kunststoffschmelze wird eine Tragstruktur des IMD-Kunststoffbauteils 5 ausgebildet, auf die sich das IMD-Lackpaket unter Wirkung von Druck und Temperatur der Kunststoffschmelze überträgt. Das IMD-Lackpaket bildet dabei eine Dekorlage auf der Tragstruktur aus.

In einem weiteren Verfahrensschritt, dargestellt anhand Fig. 9, wird das Formwerkzeug 12 geöffnet und dabei das IMD-Kunststoffbauteil 5, das durch die mittels der Kunststoffschmelze gebildeten Tragstruktur und das darauf transferierte IMD-Lackpaket gebildet ist, von der Trägerfolie 3 des Folienzuschnitts 14 gelöst. Die Trägerfolie 3 verbleibt zunächst am Spannrahmen 20. In einem nachfolgenden Verfahrensschritt wird auch der Spannrahmen 20 mit der Trägerfolie 3 aus dem Formwerkzeug 12 entnommen und die Trägerfolie 3 anschließend von dem Spannrahmen 20 gelöst.

In einem alternativen Ausführungsbeispiel stellt der in Fig. 7-10 dargestellte Spannrahmen 20 einen Bestandteil des Formwerkzeugs 12 dar. Das Handhabungswerkzeug 16 dient in diesem Fall zur Aufnahme des jeweiligen Folienzuschnitts 14, in diesem Fall konkret auf der Seite der Trägerfolie 3, und zur Übergabe dessen an den werkzeugseitigen Spannrahmen 20 (nicht näher dargestellt). Der Spannrahmen 20 ist in diesem Fall in nicht näher dargestellter Weise mit dem Formwerkzeug 12 gekoppelt (bspw. indem die Führungsstangen 24 länger als dargestellt gestaltet sind).

In Fig. 11 und 12 ist ein weiteres Ausführungsbeispiel des werkzeugseitigen Spannrahmens 20 (in einer schematischen Teilschnittdarstellung) dargestellt. In diesem Fall ist der Spannrahmen 20 auf der Werkzeug-Rückseite 30 als sogenannter Voreiler beweglich, konkret mittels in die Werkzeug-Rückseite 30 eintauchender Federn 32 befestigt. Ein ringförmig geschlossener Rahmen (konkret ein Verbindungssteg zwischen den einzelnen Saugnäpfen 18) ist in Fig. 11 und 12 nicht näher dargestellt. Das Handhabungswerkzeug 16 nimmt in diesem Ausführungsbeispiel den Folienzuschnitt 14 an der Trägerfolie 3 auf und übergibt den Folienzuschnitt 14 im Formwerkzeug 12 an den Spannrahmen 20. Im vorliegenden Ausführungsbeispiel wird der Folienzuschnitt 14 von dem Handhabungswerkzeug 16 mittels Unterdruck aufgenommen (d. h. angesaugt). Zur Übergabe wird der Folienzuschnitt 14 an die Saugnäpfe 18 des Spannrahmens 20 angesetzt und es wird ein kurzer Luftstoß abgegeben, so dass der Folienzuschnitt 14 sich von dem Handhabungswerkzeug 16 löst und von den Saugnäpfen 18 gehalten wird. Beim Schließen des Formwerkzeugs 12 kommt zunächst der Folienzuschnitt 14 mit der Werkzeug-Dekorseite 22, konkret der dortigen Dichtkontur in Kontakt und die Federn 32 werden komprimiert, so dass eine Klemmkraft für den Folienzuschnitt 14 aufgebaut wird. Anschließend wird der Folienzuschnitt 14 - gegebenenfalls unter Vorwärmung - umgeformt, konkret mittels eines Unterdrucks in die Teilkavität der Werkzeug-Dekorseite 22 "eingesaugt" und an die dortige Oberfläche angelegt. Anschließend wird das Formwerkzeug 12 geschlossen und die Kunststoffschmelze in die Kavität 11 und auf das IMD-Lackpaket eingespritzt.

In einem weiteren, alternativen Ausführungsbeispiel sind die in Fig. 11 und 12 dargestellten Saugnäpfe 18 nicht angefedert und nicht durch einen Rahmen verbunden, sondern stellen eine Haltestruktur der Werkzeug-Rückseite 30 dar. In dieser Variante kommt kein Spannrahmen 20 zum Einsatz. Das Handhabungswerkzeug 16 übergibt aber den Folienzuschnitt 14 in entsprechender Weise zu dem Ausführungsbeispiel gemäß der Fig. 11 und 12.

In Fig. 13 sind zwei verschiedene Folienzuschnitte 14 dargestellt, die für die Herstellung jeweils eines IMD-Kunststoffbauteils 5 dienen. Die zugeordneten IMD-Kunststoffbauteile 5 weisen in diesem Fall die gleiche, auf die Ebene der IMD-Folie 1 projizierte Grundfläche, mithin die gleiche Randkontur 9 auf, unterscheiden sich jedoch in der dreidimensionalen Tiefe ihrer Sichtflächen 6. Deshalb ist der Zuschlag 10 bei dem in Fig. 11 rechts dargestellten Folienzuschnitt 14 im Vergleich größer vorgegeben, um eine größere Materialdehnung beim Umformen im Formwerkzeug 12 zu ermöglichen. Auch der Spannrahmen 20 bzw. das Handhabungswerkzeug 16 sind in diesem Fall für den rechts dargestellten Folienzuschnitt 14 größer ausgebildet (nicht näher dargestellt).

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 1: IMD-Folie
- 2: Längsrichtung
- 3: Trägerfolie
- 4: Vorderseite
- 5: IMD-Kunststoffbauteil
- 6: Sichtfläche
- 8: Außenkontur
- 9: Randkontur
- 10: Zuschlag
- 11: Kavität
- 12: Formwerkzeug
- 14: Folienzuschnitt
- 16: Handhabungswerkzeug
- 18: Saugnapf
- 20: Spannrahmen
- 22: Werkzeug-Dekorseite
- 24: Führungsstange
- 26: Öse
- 28: Haltenut
- 30: Werkzeug-Rückseite
- 32: Feder

## Patentansprüche

1. Verfahren zur Herstellung eines IMD-Kunststoffbauteils (5), wobei verfahrensgemäß
- aus einer endlosen IMD-Prozessfolie (1), die eine Trägerfolie (3) und ein einseitig auf dieser aufgebrachtes, transferierbares IMD-Lackpaket aufweist, ein konturnah bezüglich einer mit dem IMD-Lackpaket zu dekorierenden Oberfläche (6) des IMD-Kunststoffbauteils (5) zugeschnittener Folienzuschnitt (14) vereinzelt wird, wobei der jeweilige Folienzuschnitt (14) konturgetreu bezüglich der zu dekorierenden Oberfläche (6) zuzüglich eines prozessbedingten Materialzuschlags (10) ausgeformt wird, wobei die Abmessungen des Materialzuschlags (10) in Abhängigkeit von einer Tiefe einer zu dekorierenden dreidimensionalen Struktur der zu dekorierenden Oberfläche (6) bestimmt und vorgegeben werden,
- der Folienzuschnitt (14) in ein geöffnetes Kunststoffverarbeitungswerkzeug (12) eingebracht wird,
- das Kunststoffverarbeitungswerkzeug (12) vollständig oder bis auf einen Resthub geschlossenen wird,
- in dem Kunststoffverarbeitungswerkzeug (12) eine fließfähige Kunststoffmasse auf das IMD-Lackpaket aufgebracht wird,
- durch die Kunststoffmasse eine Tragstruktur ausgebildet wird, und
- das IMD-Lackpaket zur Ausbildung des IMD-Kunststoffbauteils (5) als Dekorlage auf die Tragstruktur transferiert wird.

2. Verfahren nach Anspruch 1,
wobei eine Vielzahl von Folienzuschnitten (14) auf der endlosen IMD-Prozessfolie (1) genestet und anschließend vereinzelt wird.

3. Verfahren nach Anspruch 1 oder 2,
wobei der Folienzuschnitt (14) vor dem Einbringen in das Kunststoffverarbeitungswerkzeug (12) mittels eines Handhabungswerkzeugs (16) aufgenommen wird.

4. Verfahren nach Anspruch 3,
wobei das Handhabungswerkzeug (16) einen vom Kunststoffverarbeitungswerkzeug (12) separaten Spannrahmen (20) bildet, mittels dessen der Folienzuschnitt (14) beim Einbringen in das Kunststoffverarbeitungswerkzeug (12) gegenüber einer Kavität (11) des Kunststoffverarbeitungswerkzeugs (12) ausgerichtet und in dem Kunststoffverarbeitungswerkzeug (12) gehalten wird.

5. Verfahren nach Anspruch 3,
wobei der Folienzuschnitt (14) von dem Handhabungswerkzeug (16) an einen werkzeugseitigen Spannrahmen (20) übergeben wird, mittels dessen der Folienzuschnitt (14) gegenüber der Kavität (11) des Kunststoffverarbeitungswerkzeugs (12) ausgerichtet und in dem Kunststoffverarbeitungswerkzeug (12) gehalten wird.

6. Verfahren nach einem der Ansprüche 3 bis 5,
wobei der Folienzuschnitt (14) mittels des Handhabungswerkzeugs (16) und/oder des werkzeugseitigen Spannrahmens (20) konturfolgend gehalten wird.

7. Verfahren nach einem der Ansprüche 3 bis 6,
wobei das Handhabungswerkzeug (16) als Faserverbundelement ausgebildet ist.

8. Verfahren nach einem der Ansprüche 4 bis 7,
wobei der Folienzuschnitt (14) mittels des separaten oder des werkzeugseitigen Spannrahmens (20) an eine Dichtfläche des Kunststoffverarbeitungswerkzeugs (12) zur Abdichtung gegenüber der Kavität (11), insbesondere mittels einer an dem Spannrahmen (20) ringartig einer Außenkontur (8) des Folienzuschnitts (14) folgend angeordneten Schließkontur angedrückt wird.

9. Verfahren nach einem der Ansprüche 1 bis 8,
wobei zwischen der dem IMD-Lackpaket abgewandten Seite und dem Kunststoffverarbeitungswerkzeug (12) eine Druckdifferenz zur Umformung des Folienzuschnitts (14) aufgebracht wird.

10. Verfahren nach Anspruch 3,
wobei der Folienzuschnitt (14) von dem Handhabungswerkzeug (16) an eine an einer Werkzeughälfte (22,30) des Kunststoffverarbeitungswerkzeugs (12) angeordnete Haltestruktur übergeben wird.

11. Verfahren nach einem der Ansprüche 1 bis 10,
wobei der jeweilige Folienzuschnitt (14) in Abhängigkeit von einem Dekor des IMD-Lackpakets auf der IMD-Prozessfolie (1) ausgerichtet wird.

12. Verfahren nach einem der Ansprüche 1 bis 11,
wobei das Kunststoffverarbeitungswerkzeug (12) mehrere Kavitäten (11) aufweist, und wobei mehrere Folienzuschnitte (14) in jeweils eine Kavität (11) des Kunststoffverarbeitungswerkzeugs (12) eingebracht werden, optional mittels jeweils eines zugeordneten Handhabungswerkzeugs (16).

13. Anlage zur Herstellung eines IMD-Kunststoffbauteils (5), dazu eingerichtet, das Verfahren nach einem der Ansprüche 1 bis 12 durchzuführen,
mit einer Kunststoffverarbeitungsmaschine, mit dem Kunststoffverarbeitungswerkzeug (12), das die Kavität (11) zur Ausbildung des IMD-Kunststoffbauteils (5) aufweist, und mit einem das Handhabungswerkzeug (16) tragenden Handhabungsgerät, mittels dessen der Folienzuschnitt (14) in das Kunststoffverarbeitungswerkzeug (12) eingebracht wird.
